# EUROPEAN PATENT SPECIFICATION

(11) **EP 4 532 966 B1**
(45) Date of publication and mention of the grant of the patent: **06.05.2026**
(21) Application number: 23729823.7
(22) Date of filing: 25.05.2023
(51) Int. Cl.: F16L 1/24

(54) **A SAG BEND SUPPORT DEVICE FOR AN UNDERWATER PIPE, AND A PIPE LAYING SYSTEM COMPRISING THE SAME**
SENKUNGSBIEGESTÜTZVORRICHTUNG FÜR EIN UNTERWASSERROHR UND ROHRVERLEGUNGSSYSTEM DAMIT
DISPOSITIF DE SUPPORT DE COUDE DE TUYAU VERS LE BAS POUR UN TUYAU SOUS-MARIN, ET SYSTÈME DE POSE DE TUYAU LE COMPRENANT

(30) Priority: 31.05.2022 GB 202208080
(43) Date of publication of application: 09.04.2025
(73) Proprietor: Verderg Pipe Technology Limited, Kingston upon Thames, Surrey KT2 6QF (GB)
(72) Inventor: ROBERTS, Peter, Kingston Upon Thames Surrey KT2 6QF (GB)
(74) Representative: Forresters IP LLP
(86) International application number: PCT/GB2023/051375
(87) International publication number: WO 2023/233127

(56) References cited:
- WO-A1-2015/185951
- CN-A- 114 044 096
- US-A- 4 065 822

## Description

The present disclosure relates to a sag bend support device for supporting the sag bend of an underwater pipe during installation. It further relates to a pipe installation system comprising the sag bend support device, and a method for installing an underwater pipe using the sag bend support device.

Marine pipelines are generally installed onto the seabed in a manner analogous to the installation of marine telephone or power cables, wherein the top of the cable is paid out under tension by an installation cable laying ship as it moves ahead. The cable thereby hangs in a catenary shape under a horizontal force sufficient to prevent a sharp bend forming in the most vulnerable section of the cable known as the "sag bend", which lies just above the seabed. The same principle applies to marine pipelines but the major distinction between cables and pipelines is that a pipeline is generally significantly heavier and less flexible than a cable, necessitating a significantly larger and more robust installation vessel.

Pipe lay vessels are typically built in one of three generic configurations:
1) S-Lay configuration.
2) J-Lay configuration.
3) Reel-Lay configuration.

An S-Lay configured vessel has the pipe departing over the stern of the vessel substantially horizontally such that the pipe bends twice into a double catenary with a convex bend downwards through the sea surface and a concave bend back towards the horizontal in the sag bend just above the seabed.

This was the original technique employed on thin-walled pipe in shallow water where the vessel could be a dumb barge laying the pipe whilst pulling itself forwards on multiple anchors, reset sequentially by anchor-handling tugs in a manner analogous to a spider or crab walking. Such shallow-water pipelines are usually covered in concrete to protect them but more significantly, to give them sufficient negative buoyancy to sink onto the seabed and remain in place in the presence of the high currents often associated with shallow water. Such S-Lay vessels may also have a curved framework, or "Stinger", projecting beyond the stern of the vessel to help control the convex bend of the pipe downwards as it passes beyond the stern of the vessel.

J-Lay configuration vessels are employed in deeper water where continuously anchoring and re-anchoring the vessel is impractical. The horizontal force on the pipe is provided by steerable thrusters on the vessel. The pipe hangs more nearly vertical off the vessel in a single catenary to minimise the necessary horizontal force being induced by the thrusters. Such pipe is generally not weight coated but has sufficient negative buoyancy to remain in place once laid because of the thick steel pipe wall needed to resist hydrostatic pressure at such depths.

The speed at which any pipe laying vessel can move forwards is affected by multiple issues including how quickly new pipe inventory can be re-stocked onto the pipe lay vessel out in the open sea and in particular by how quickly each weld between pipe sections can be made and inspected to be proven sound. The J-Lay technique usually necessitates making repeated vertical pipe welds on sequential sections of heavy pipe with very high wall thickness.

Reel-Lay configuration vessels mimic cable-laying practice by bending the pipe around a large vertical drum or into a large horizontal carousel. The pipe is deformed plastically twice as it is reeled and unreeled once again. Reel-installed pipe is generally of low diameter and cannot be concrete weight coated as such coating would break off when reeled.

Prior art arrangements are known from WO 2015/185951, US 4065822 and CN 114044096.

Several generations of marine pipeline installation vessels (hereinafter referred to as lay vessels) have now been commissioned over many decades with increasing axial tension and horizontal force capability at each generation to match the increasing water depth of oil and gas reservoirs under exploitation. The largest current generation of lay vessels, however, has now reached its limiting pipe lay depth capability as calculated using the code of recommended practice.

The depth beyond which code compliance cannot be met by any particular pipeline is influenced by two code requirements. Firstly, the code specifies a minimum recommended wall thickness limited by the risk of hydrostatic external pressure collapse at the proposed depth of installation. Secondly, the code specifies a maximum recommended combined bending and compressive stress that is acceptable in the Sag Bend region at that depth.

Increasing the water depth into which the current large vessels can lay pipe would increase the net weight of the pipe being supported in a catenary.

Firstly, it would not be possible to avoid exceeding the maximum code-recommended combined bending and compressive stress that is acceptable in the Sag Bend region.

Secondly, there would be the risk of overloading the mechanical handling gear on the lay vessel, which might thereby require upgrading. Furthermore, the owners of these vessels are concerned about the consequences of such a heavier pipe suddenly physically severing for unforeseeable reasons just below the lay vessel. This would subject the lay vessel to a substantial vertically upwards impulse force possibly of 1,000 tonnes or more having a detrimental effect on the vessel stability. This might necessitate expensive upgrading or indeed a more robust new vessel to accommodate.

However, the marine pipe laying industry increasingly needs to be able to install pipes into deeper water and/or to have larger pipe diameters in deep water than the design code currently allows.

The present invention arose in a bid to provide a solution to the problems discussed, and to permit the laying of pipelines in deeper water than is currently possible.

According to the present invention in a first aspect, there is provided a sag bend support device for attachment to an underwater pipe being laid, as recited by Claim 1.

With such an arrangement it is uniquely possible to lay a pipeline in very deep water whilst limiting the bending stresses in the sag bend to within code-compliant values. Moreover, the top tension and horizontal forces are maintained within acceptable limits, and the severity of any potential vertically upwards impulse force on the lay vessel, as a result of a severed pipe, is significantly reduced, thereby eliminating the need for upgrades to existing lay vessels.

The present invention accordingly facilitates a safe extension of the installation depth capabilities of the current generation of lay vessels as determined by reference to the established deep water pipeline design code. The sag bend support device can be deployed in the sag bend without having to challenge the validity of the design code or to design, construct and commission another even larger generation of lay vessels at much greater expense.

The sag bend support device is preferably arranged to travel along the pipe whilst it is attached thereto. The sag bend support device may be arranged to maintain a constant distance from the lay vessel. By such arrangement, the sag bend support device may provide continuous support to the sag bend.

A braking mechanism is preferably provided for controlling the sliding of the support along the pipe. The braking mechanism may provide a fixed or variable braking force.

In order to permit the sliding of the support along the pipe, the support is preferably provided with one or more wheels, rollers or tracks for engaging the pipe.

By the use of a tether, the buoyancy element may be located in shallower water than the support, which will reduce the pressure exerted on the at buoyancy element and may allow for a simplified construction of buoyancy element. The tether may comprise a cord, cable or strap. At least one of the buoyancy elements may comprise a gas filled bag.

A variety of operational control strategies are available for the sliding support, which may depend on the specific configuration of the support. The simplest strategy is fully passive operation where the sliding body is set up on the lay vessel before deployment. Semi-automated to fully remote-controlled operation is alternatively possible by use of Remotely Operated Vehicles for monitoring and control purposes, or otherwise.

Whilst the passive control mode is simplest, it is the least flexible, since it cannot be simply adjusted during operation. Some real-time adjustment will be possible in a semi-automated control mode. A fully automated strategy under the control of a management team on diving support or lay vessels will provide the maximum flexibility but greater complexity.

A first buoyancy element associated with a first of the supports may have the same or a different buoyancy than a second buoyancy element associated with the second support.

As noted, the buoyancy elements may be configured such that the buoyant force imposed on the two supports is different. The trailing one of the supports may comprise a pulley for slidably engaging with the tether. The leading one of the supports may comprises at least one of the buoyancy elements attached thereto, wherein the arrangement of the buoyancy elements is such that a greater buoyant force is imposed on the leading one of the supports than on the trailing one of the supports. The buoyancy element attached to the leading one of the supports is preferably attached thereto via a tether.

The direction of sliding travel along the pipe will be in a direction towards the lay vessel, i.e., upwards along the pipe towards the surface.

According to the present invention in a further aspect, there is provided a pipe laying system comprising a lay vessel, a pipe, and a sag bend support device as defined above for supporting a sag bend of the pipe.

Further, preferable, features are presented in the dependent claims.

Embodiments of the present invention will now be described, by way of non-limiting examples only, with reference to the Figures in which:
Figure 1 shows a deep water pipeline with a sag bend support device according to the present invention deployed;
Figure 2 shows a close-up view of the sag bend support device of Figure 1;
Figure 3 shows an exemplary configuration of a support for use in a sag bend support device according to the present invention;
Figure 4 shows a variant of the support of Figure 3;
Figure 5 shows an exemplary configuration of a support for use in a sag bend support device according to the present invention;
Figure 6 shows detail of a trolley component for a support;
Figures 7 to 15 show the progress of a sag bend support device, which comprises a pair of supports climbing alternately up a pipe;
Figure 16 clarifies the movement of all components of a pair of exemplary supports;
Figures 17 to 20 show exemplary alternative design concepts for supports;
Figure 21 shows an exemplary passive method for retain a support on station;
Figure 22 shows alternative facilities to help implement passive control of a sag bend support system; and
Figure 23 shows exemplary methods for fully managed rather than passive control of a sag bend support device, and for recovery of potential energy released during pipelay.

There is provided a sag bend support device 1 for attachment to an underwater pipe 3 being laid. The device 1 is configured to support the sag bend to reduce the radius of curvature of the sag bend and thereby limit bending stresses in the pipe 3.

The description that follows presents a number of differently arranged sag bend support devices 1 and pipe laying systems comprising those sag bend support devices 1. It must be appreciated that the disclosed arrangements present exemplary arrangements only. Moreover, where any feature is described in the context of a specific arrangement, the described feature is not to be limited to that specific arrangement or inextricably linked with the other features of that arrangement.

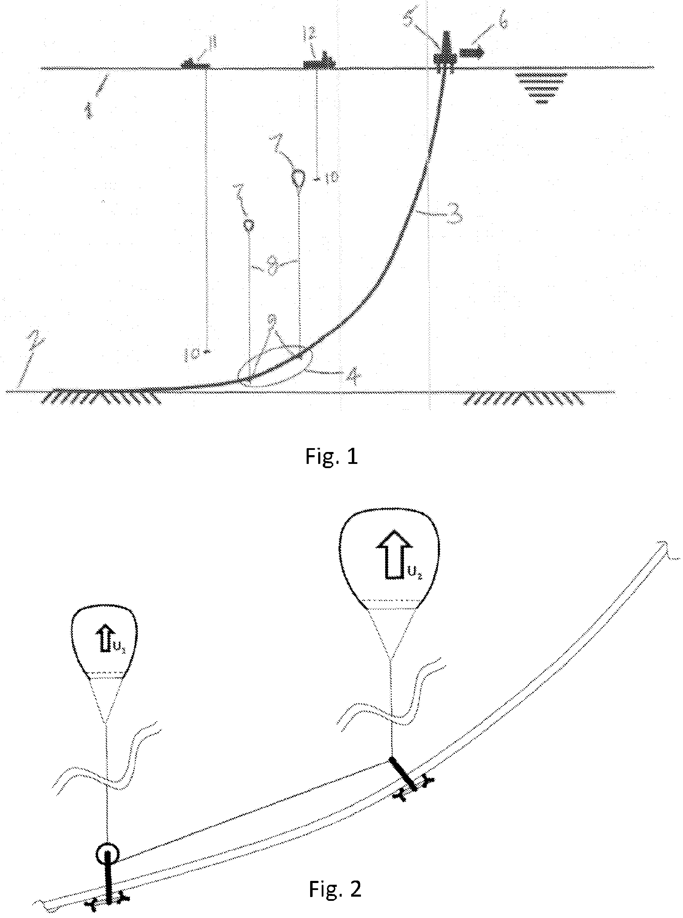

Figure 1 shows a typical deep water pipeline with a sag bend support device 1 deployed. Figure 2 shows a close-up view of the sag bend support device 1 of Figure 1.

The pipe 3 being laid hangs in a catenary down to the seabed 2 from a lay vessel 5 on the surface. The area of maximum loading is around the sag bend 4 just above the seabed. In the sag bend 4, in general, there may be high compressive hydrostatic loading combined with high bending stresses. As discussed, the sag bend 4 is an area for which the commonly-used design code of recommended practice provides a formula to calculate the combined hydrostatic pressure and bending stresses with a limiting value acceptance criterion.

The normal design practice, for ensuring that the combined stresses in the sag bend 4 are code-compliant, has historically been to increase the capability of the lay vessel 5 to exert a horizontal force 6 at the top of the pipe 3 thus reducing the bend radius of the pipe 3 in the sag bend 4 with a corresponding reduction in bending stresses there.

The present invention is derived, in particular, for use when an existing vessel is required to: A) lay pipe 3 into a water depth beyond which it can no longer sustain a horizontal force 6 sufficiently large to limit the sag bend stresses within the code compliance limit, B) to lay a pipe 3 having a larger diameter than the currently largest code-compliant diameter at the existing limiting water depth, or C) where the vertically upwards impulse force of an accidental severance of the pipe 3 would endanger lay vessel 5, or any mixture of these three factors.

Rather than deploying a larger and more capable lay vessel, or challenging the code with a project-specific safety case for such an installation, the present invention provides the sag bend support device 1, which lifts the pipe sag bend 4 thus reducing its radius of curvature, lowering the sag bend stresses and ensuring code compliance.

In the exemplary arrangement of Figures 1 and 2, the sag bend support device 1 comprises two buoyancy elements 7. The buoyancy elements 7 may comprise conventional air-filled buoyancy bags. It should be appreciated that in alternative arrangements more buoyancy elements 7 may be provided. Moreover, the buoyancy elements 7 may take various alternative forms. The buoyancy elements 7 may be tailored to the specific pipe/pipe laying location, including the operating depth for the buoyancy elements. For example, where the buoyancy elements 7 are to be located at a large depth, they may be adapted in form to cope with the high pressure acting thereon. Any suitable conventional form of buoyancy element 7 may be implemented.

Each buoyancy element 7 is attached either directly or via a tether 8 to a support 9, which is arranged to slide along the pipe 3. With the use of tethers 8, the buoyancy elements 7 are arranged in shallower water and subject to lower pressure. The tethers may take any suitable form. They may comprise cables, which may be formed from steel or non-ferrous materials including artificial fibres, or woven straps.

Monitoring and operational assistance may additionally be provided by one or more remote operating vehicles (ROVs) 10. ROVs may be deployed either from one or more diving support vessels (DSVs) 10, 11 or from the lay vessel 5.

When the buoyancy elements 7 comprise buoyancy bags 7 they may most conveniently be inflated using an ROV 10 deploying a compressed air hose from the DSV 11 or lay vessel 5. Another gas such as compressed nitrogen may alternatively be used.

The length of the tether(s) 8 is a detailed design choice. As noted, making tethers 8 longer allows the buoyancy bags 7 to be closer to the surface where they are more readily accessed by ROVs10 for deployment, inflation with a lower pressure compressed air hose, and other intervention. However, when the buoyancy bags 7 are closer to the surface, they have additionally to bear the submerged weight of the extra lengths of the tether 8 unless it is made from an artificial fibre that has significant neutral buoyancy, or otherwise.

Each of the supports 9 comprises a braking mechanism for controlling the sliding of the support along the pipe. Numerous suitable forms of braking mechanism will be possible, as will be readily appreciated by those skilled in the art. The braking mechanism is preferably arranged to apply a variable braking force.

Each of the supports 9 preferably comprises one or more wheels, rollers or tracks for engaging the pipe to assist sliding movement of the support along the pipe.

It is common in the design of deep water pipelines to have a short reinforced section set into the pipeline at fixed intervals to arrest any propagating buckle that might form under unpredicted circumstances. A propagating buckle flattens the pipe completely and the damaged section has to be cut out and replaced, an onerous task in deep water. These "buckle arrestors" can be short lengths of forged steel pipe pieces with a very high wall thickness, or might be flange pairs if flanged connections are adopted instead of welded connections. It is also common in marine pipelines, irrespective of the water depth, to have "bracelets" of cathodic protection anodes attached intimately to the pipe at regular intervals to limit damaging corrosion.

It is preferable, that the sag bend support device 1 is suitably configured so that it is able to move past both buckle arrestors and/or anodes should these be encountered. The one or more wheels, rollers or tracks may, as will be appreciated, be configured accordingly in dependence on the form of buckle arrestors or bracelets to be encountered along the pipe 3.

With reference to Figure 2, the present arrangement comprises two supports 9 and two buoyancy elements 7. The supports comprise a trailing support 9a and a leading support 9b. A first of the buoyancy elements 7a is associated with the trailing support 9a for imposing a buoyant force thereon, and a second of the buoyancy elements 9b is associated with the leading support 9b for imposing a buoyant force thereon.

It is preferable that the second buoyancy element 9b has greater buoyancy U₂ than the buoyancy U₁ of the first buoyancy element 9a. However, it should be appreciated that this need not be the case in alternative arrangements comprising more than one buoyancy element.

In the present arrangement, the supports 9 are joined to one another via the tether 8a. The tether 8a is attached to the leading support 9b and extends to and slidably engages with the trailing support 9a before terminating (dead-ending) at the first of the buoyancy elements 7a. In the present arrangement, the trailing support 9a comprises a pulley 16 for slidably engaging with the tether 8a. As discussed further below, and will be readily appreciated, various alternative alternatives to pulley 17 are possible.

The operation of the exemplary system shown in Figures 1 and 2 will be now be described. The sag bend 4 experiences the constant beneficial support of the total vertical buoyancy of both buoyancy elements 7 combined. The forces experienced by the supports 9 parallel to the pipe 3, which forces move the sliding supports along the pipe 3 are significantly smaller by comparison.

As the pipe 3 is laid onto the seabed 2 both supports 9a, 9b preferably move along the pipe 3, up the pipe towards the lay vessel 5, at an average speed equal to the lay rate of the lay vessel 5 such that they are at all times supporting the area of the sag bend 4.

The two sliding supports 9a, 9b move up the pipe 3 as it is laid down in a manner analogous to two rock climbers alternating between climbing and paying out rope from a secure position to arrest a fall by the other climber. However, instead of gravity acting downwards on the climbers, there is buoyancy acting upwards on the sliding supports 9.

In such an arrangement, with each support 9 only moving up the pipe 3 for half the time, the actual velocity of a moving support 9 relative to pipe 3 must at least equal twice the lay rate of lay vessel 5. To provide some context, however, the lay vessel is unlikely to progress horizontally at more than around 3.5 metres per minute.

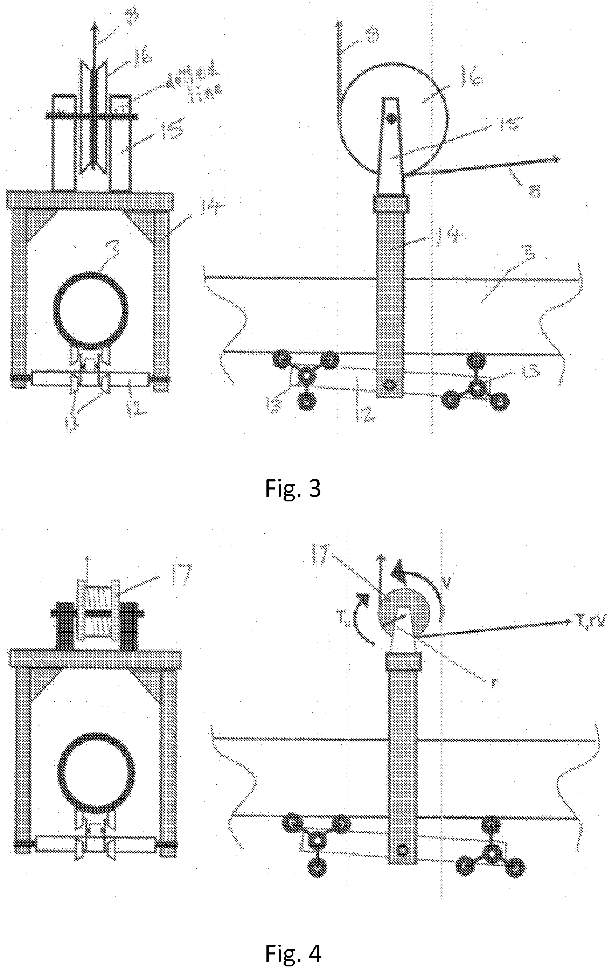

Figure 3 shows one exemplary configuration of the support 9a in side and end elevations. Support 9a comprises a trolley 12 fitted with two pairs of three-axle satellite wheel stars 13 with the satellite wheels at 120° spacing circumferentially. Each pair of stars 13 are deployed on either side of the trolley 12 fixed to an axle passing through and rotating in the trolley 12 such that each pair of stars 13 are in the exact same orientation at all times in side elevation. Trolley 12 is rotatably mounted on a frame 14 of the support 9a. The pipe 3 is supported by the stars 13 whilst being free to slide axially on the satellite wheels forming part of the stars 13. A trunnion 15 carries the pulley 16 under which the tether 8a passes. In one favoured passive design, the pulley 16 is provided with a friction brake, which forms part of the braking mechanism for the sag bend support device 1. The friction brake will be cooled by the surrounding sea water. The friction brake will act to modulate the speed of rotation of pulley 16 and pay-out velocity of tether 8a.

Frame 14 will preferably comprise a suitable mechanism to allow its attachment to/detachment from the pipe 6. A suitable conventional flange and/or hinge arrangement may be provided for such purposes, as will be readily appreciated by those skilled in the art.

Figure 4 shows one possible variant of the support 9a shown in Figure 2. In this variant, the pulley 16 is replaced by a capstan brake 17. The tether 8a will make more than one complete turn on the drum of Capstan Brake 17. This variant will, for example, accommodate configurations where there is insufficient friction between tether 8a and the pulley 16 to prevent slippage of the tether 8a.

It should be appreciated that in alternative arrangements, the pulley 16 or capstan brake 17 may be replaced with any alternative means that allows for the suitable sliding support of the support 9a by the tether 8a.

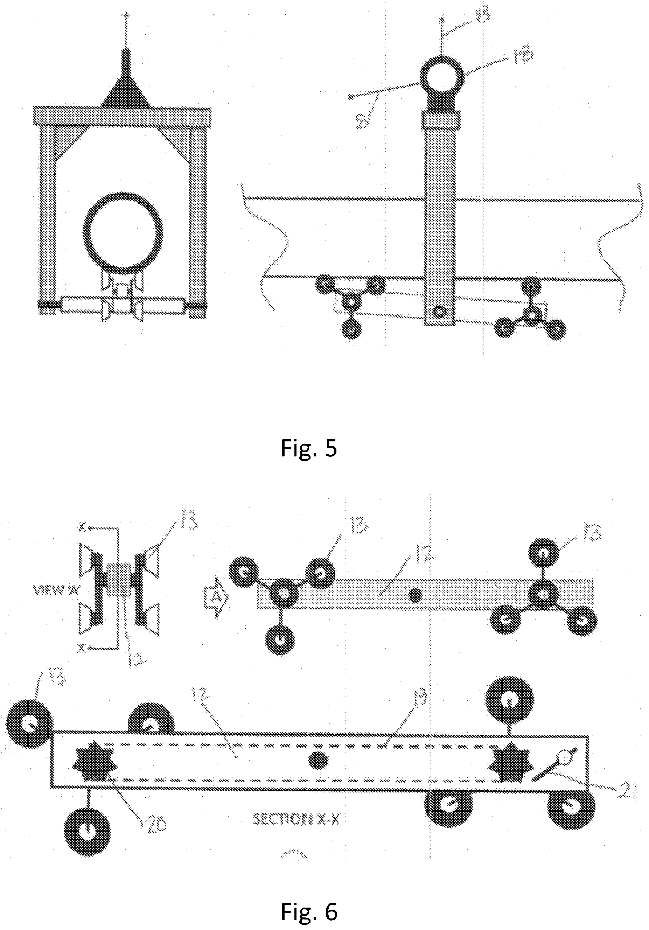

Figure 5 shows one possible configuration of the support 9b in side and end elevations. This is generally similar to the support 9a, as exemplarily discussed above with reference to Figures 3 and 4, however, in place of the pulley 16 or capstan brake 17, or other suitable means, an eye 18 is provided to which the tether 8a is attached.

Figure 6 shows more detail of the trolley 12 and stars 13. Section X-X reveals that inside the trolley 12, which may be formed by a box section beam, there may be provided a chain 19 connecting drive cogs 20 together. The two stars 13 are permanently fixed to the same axles on which cogs 20 are permanently fixed and each axle together with its cog 20 and star 13 is free to rotate on trolley 12. The cogs are preferably mounted via suitable bearings. Chain 19 is assembled onto the cogs 20 such that as the two stars 13 on the trolley 12 rotate they remain at all times 60° apart. By such arrangement, when any one of the supports 9 has two small wheels on each star 13 at one end of trolley 12 supporting the pipe 3, each star 3 at the other end of trolley 12 will have a single small wheel supporting the pipe 3 as shown in Figures 3 and 4. Figure 6 Section X-X also shows the possible provision of lock 21, which may comprise any suitable conventional mechanical device which when engaged prevents cogs 20 and the two stars 13 on the trolley 19 from rotating.

It should be appreciated that the trolley 12 and stars 13 are merely one possible mechanism for enhancing the sliding of the supports 9 along the pipe 3 in use, and past any buckle arrestors or bracelets. Numerous alternative arrangements will be possible. Moreover, the chain drive mechanism is merely one suitable mechanism and is not limiting.

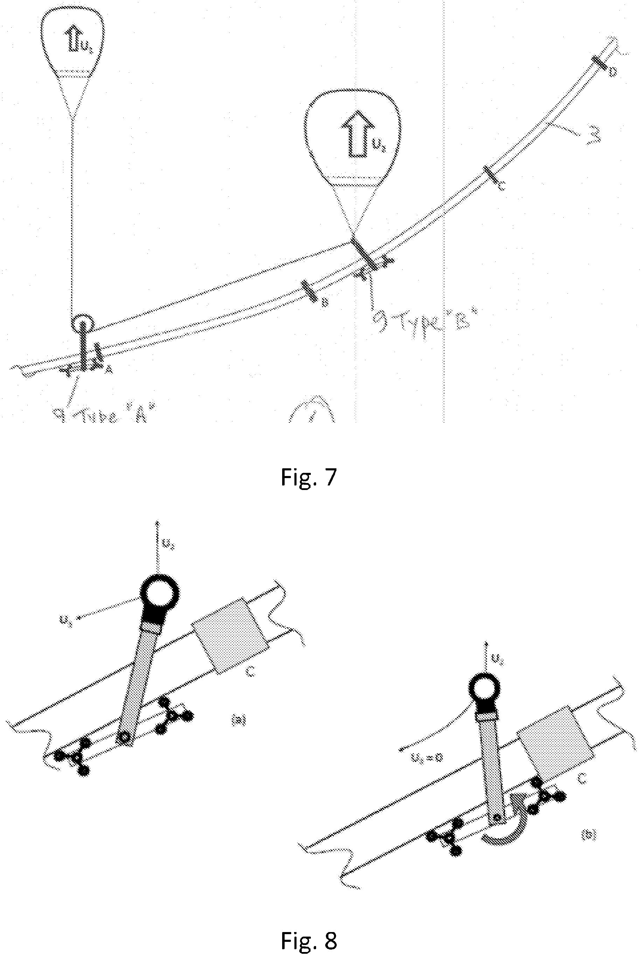

Exemplary operation of the sag bend support device 1 will now be considered in further detail with reference to Figures 7 to 16. Note that the sag bend support 1 of these Figures is arranged in conformity with the sag bend support device of Figures 1 and 2, except the buoyancy element 7 is attached directly to the leading support 9 rather than via a tether.

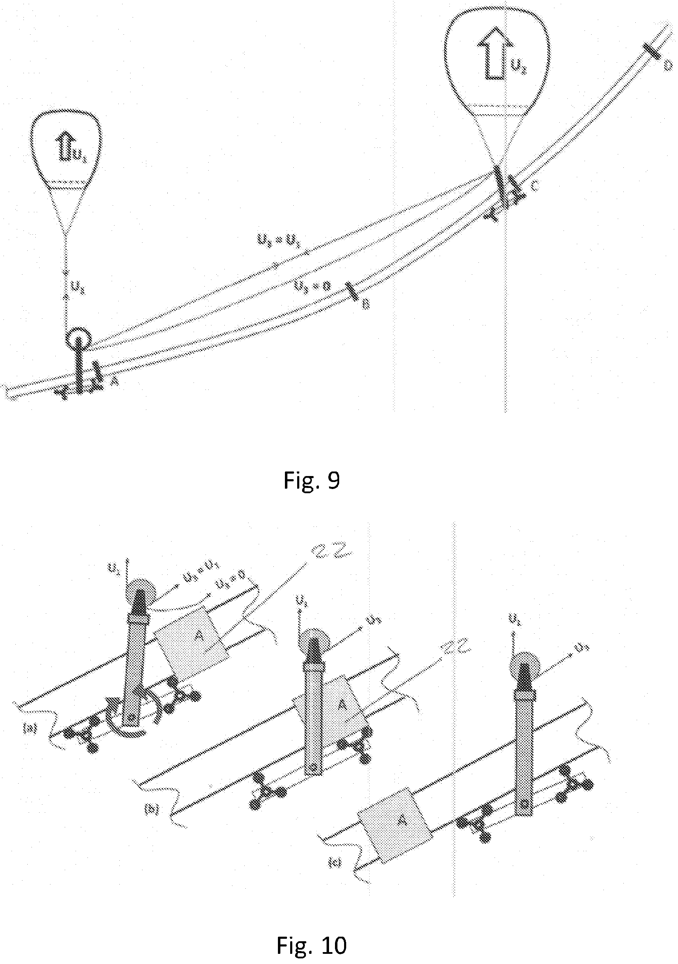

In Figure 7, the trailing support 9a is shown anchored behind buckle arrestor A in the sag bend 4 with the leading support located just past buckle arrestor B in the sag bend 4. The support 9a pays out the tether 8a permitting support 9b to be pulled up by buoyancy element 7b along the pipe 3 until it reaches the buckle arrestor two stations up the pipe 3 at buckle arrestor C but still in the sag bend 4 area, as seen in Figure 9. Note that as the support 9a pays out the tether 8a to permit support 9b to be pulled up by buoyancy element 7b along the pipe 3, the buoyancy element 7a above the trailing support 9a will be pulled downwards by the relevant component of superior uplift U₂. The braking function of the pulley 16, the capstan Brake 17, or any alternative mechanism that may be implemented, moderates the speed at which the support 9b climbs up the pipe 3 thereby avoiding damage as it reaches the buckle arrestor at C. Support 9b remains held behind this buckle arrestor C by engagement of a lock or brake 21.

In the present arrangement, the buoyancy element 7a above the leading support 9b has a sufficiently larger buoyancy compared to the buoyancy element 7b above the support 9a for the leading support 9b to remain in contact with the buckle arrestor at Station C. It is to be noted that the relative buoyancies of the trailing and leading buoyancy elements 7a, 7b will be suitably balanced for desired operation. For example, over-inflating buoyancy element 7b may result in increasing the tension in tether 8a at various stages of the operation beyond that necessary for the sag support device 1 to work, potentially giving rise to a need for unnecessary component size and strength.

An exemplary sequence of events as the trailing support 9a is stopped at the buckle arrestor C is considered in more detail with reference to Figures 8a and 8b. The leading support 9b is shown sliding up the pipe 3 towards buckle arrestor C in Figure 8a. This buckle arrestor may, for example, comprise a forged heavy wall pup piece. The leading support 9b travels at a moderate near-constant speed where the components parallel to pipe 3 of U₃, the submerged weight of support 9b and uplift U₂ are in equilibrium. Figure 8b shows the moment that the leading support 9b reaches buckle arrestor position C and is halted as it gently impacts the buckling arrestor C and the lock 21 is engaged. The climbing movement is instantaneously arrested by the leading stars 13 on the trolley 12 coming into contact with the buckle arrestor C. The uplift U₁ on the eye 18 now rotates the frame 14 suddenly anticlockwise assisted instantaneously by force U₃ as shown in Figure 7b. Tether 8a between the two supports 9a, 9b falls slack reducing force U₃ instantaneously to zero. This is because the pulley 16, capstan brake 17, or other mechanism, is bidirectional and it will take time for force U₁ to rise, taking up the slack in tether 8a between the two supports 9a, 9b.

Figure 9 illustrates the instantaneous situation where support 9b has just been stopped at the buckle arrestor C on the pipe 3. Frame 14 has rotated anticlockwise and tether 8 between the two Sliding Supports 9 has gone slack.

Figure 10a shows that as force U₁ lifts the buoyancy element 7a, tether 8a starts to rotate the pulley 16 or capstan brake 17 in the reverse direction to take up the slack in the portion of tether 8a between the two supports 9a, 9b, after which the tension U₃ in tether 8a between the two supports 9a, 9b rises back up to U₁. Figure 10a also shows that these tension changes in the tether 8a between the two supports 9a, 9b causes the frame 14 of the support 9a to rotate quickly anticlockwise and then back clockwise as the tension throughout the tether 8a rises back up to U₁.

Figure 10b shows that this reversed rotation can be used to actuate linkages for releasing the lock 21 permitting the leading stars 13 on the trolley 12 of the trailing support 9a to rotate anticlockwise such that the two satellite wheels on this Star 13 climb up onto the projecting surface of the Buckle Arrestor 22 propelled by the tension U₃ in the tether 8a as the buoyancy element 7a directly above it rises gently rotating Pulley 16 or Capstan Brake 17 as it rises. However, as the leading Star 13 turns 120° anticlockwise the trailing stars 13 on the same trolley 12 also turns 120° anticlockwise because the two pairs of stars 13 are connected by chain 19. This brings a single satellite wheel on trailing stars 13 into contact support of the pipe 3 as shown in Figure 9b. As the trailing stars 13 encounter the projecting edge of the buckle arrestor A (or flange pair if adopted) it now in turn rotates anticlockwise by 120° bringing the support 9a back into its original configuration. Lock 21 is also re-engaged by this anticlockwise rotation of the trailing star 13 in the trolley 12 actuating the linkage mechanism.

Figure 10c shows the continuing progress of the support 9a after both its stars 13 have cleared the buckle arrestor A and it moves up towards the buckle arrestor B.

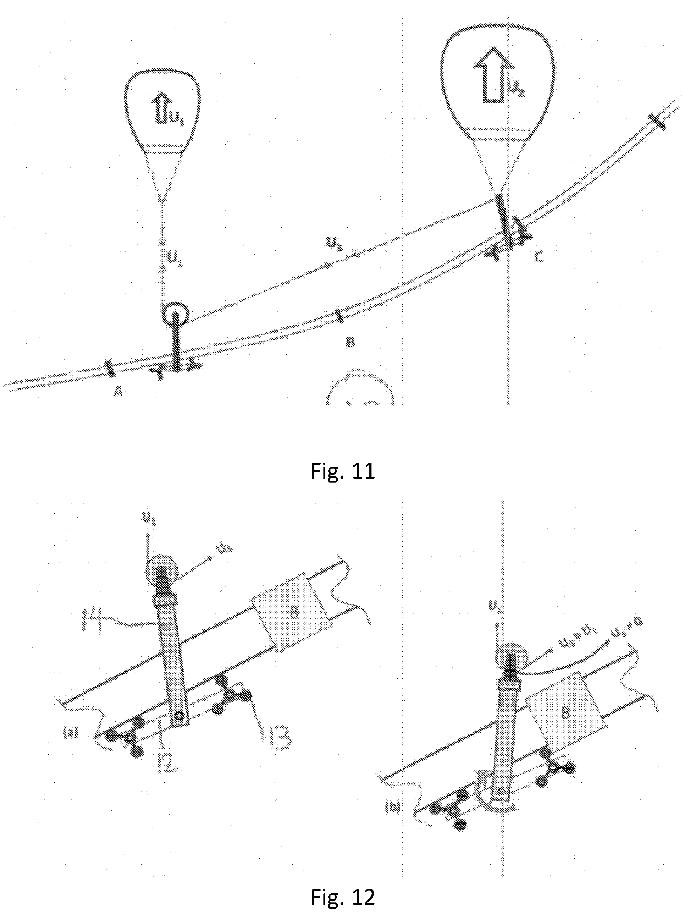

Figure 11 shows an expanded view of the situation in Figure 10c.

Figure 12a shows the next position shortly after that shown in Figure 10c where the support 9a slowly approaches the buckle arrestor B with its velocity of travel up the pipe 3 moderated by the braking action of the pulley 16, capstan brake 17, or otherwise.

Figure 12b shows the support 9a arrested with its stars 13 locked behind the buckle arrestor B. Frame 14 instantaneously makes a small rotation clockwise because tension U₃ is still acting but the trolley 12 is stationary and this rotation causes the tether 8a between the supports 9a, 9b to go slack, instantaneously reducing the tension U₃ in the tether 8a between the supports 9a, 9b to zero. Soon afterwards the pulley 16, capstan brake 17, or alternative mechanism will permit sufficient tether 8a to spool through under tension U₁ to recover the slack.

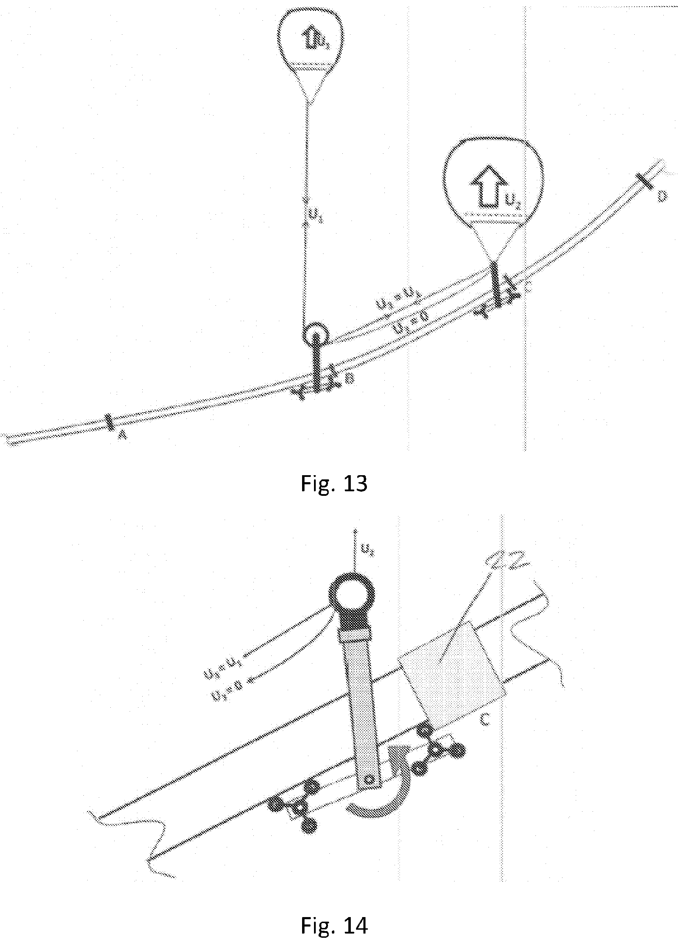

Figure 13 shows the situation of Figure 11b in an expanded view as the support 9b remains at the buckle arrestor C and the support 9a is stopped at the buckle arrestor B with tension U₃ instantaneously at zero before rising again to U₁.

Figure 14 shows that when the tension in tether 8a goes slack between the supports 9a, 9b, as shown in Figure 11b, it also goes slack at its upper end where it terminates on the support 9b. Frame 14 of the leading support 9b makes a quick rotation anticlockwise before tension U₃ = U₁ is re-established. This oscillation of the frame 14 disengages the lock 21 through an appropriate mechanism and its trolley 12 climbs over the buckle arrestor C in exactly the same manner as described for the trailing support 9a in Figure 10.

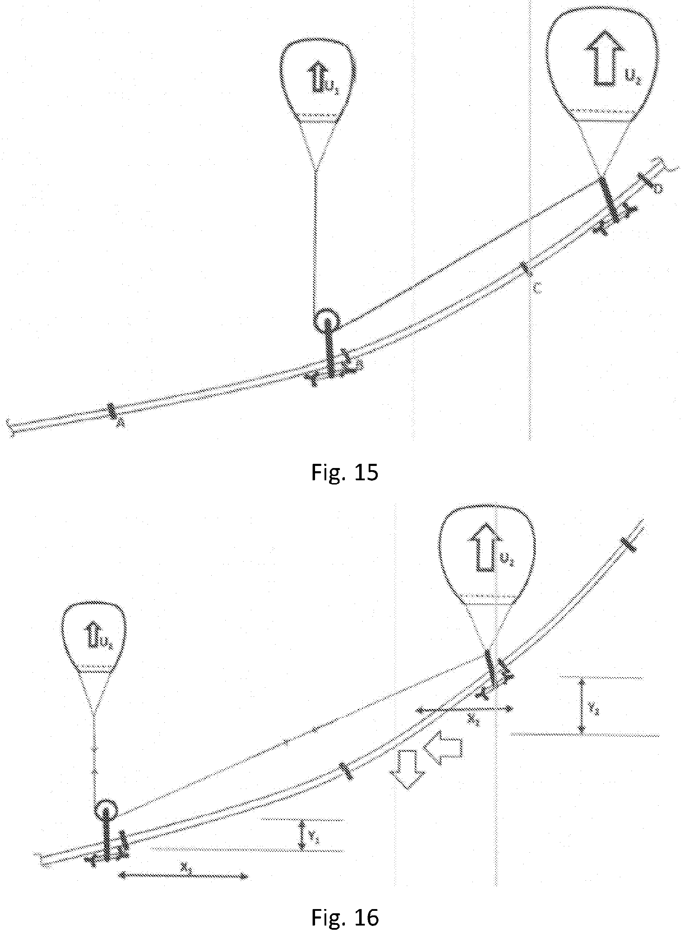

Figure 15 shows the position shortly thereafter as the sliding support 9a is held behind the buckle arrestor B and the support 9b is travelling up the pipe 3 on its progress between Stations C and D. This completes the cycle starting in Figure 7 when both the supports 9 have moved up the pipe by one Station. This cycle repeats until the entire deepwater section of the pipeline is laid.

Figure 16 clarifies the movement of all components in Global Coordinates that preferably move on average at a steady velocity with the lay vessel 5. This reflects the reality that from a viewpoint on the lay vessel 5, the pipe 3 moves away and downwards from the lay vessel 5 whereas the touch-down point where the pipe 3 first meets the seabed 2 and the sag bend 4 both move in lock-step with the lay vessel 5. Note that in these coordinates, the support 9a moves towards and back from the lay vessel 5 horizontally by a distance X₁ and vertically up and down by Y₁ whilst the support 9b moves away from and towards the lay vessel by X₂ and vertically down and up by Y₂. On average, both supports 9 remain a constant distance above Sea Bed 2 at a constant distance behind the lay Vessel 5, when the seabed is horizontal.

Various alternative, exemplary, arrangements will now be considered. Any of the disclosed features of these arrangements may be isolated from the specific arrangement described and integrated into any of the other arrangements, including those discussed above. The arrangements are not limiting.

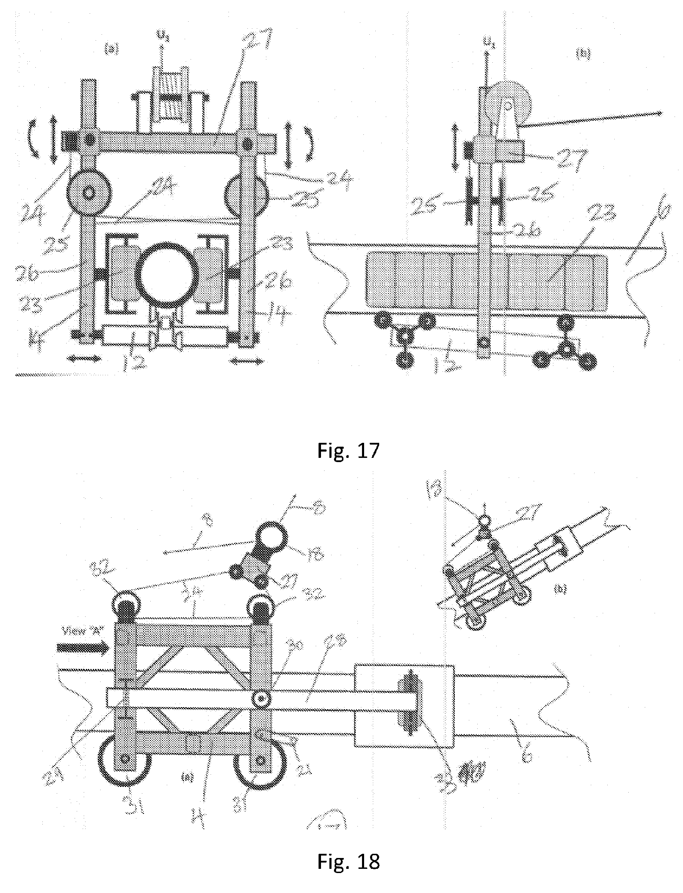

Figure 17 reveals an alternative design concept, which may be applied to either the sliding support 9a or the sliding support 9b, or any alternative sliding support 9. A caterpillar track 23 is attached to each vertical side 26 of the frame 14 to improve the directional stability of the support 9 helping maintain its alignment parallel to the pipe 3. The rotational alignment of the frame 14 looking along Pipe 3 is assisted in all configurations by the height of the attachment of the tether 8 above the centreline of the pipe 3. The track 23 will additionally help prevent the frame 14 from rotating unduly about its vertical centreline. Previously disclosed configurations of support 9 have provided vertical support only, thus permitting Frame 14 to fall and rise again slightly away from the pipe 3 when buckle arrestors or anodes pass through. Subject to the specific arrangement of the tracks 23, there may be a facility provided for them to move apart whilst passing over any obstructions. This may, for example, be achieved by hinging both of the sides 26 as indicated by the curved arrows. The pressure of each track 23 onto the side of the pipe 3 can be maintained with suitable springs or alternatively, as shown in Figure 17, by utilising the buoyancy uplift force. In this exemplary concept the bar 27 of the frame 14 may itself be free to slide up and down on both sides 26 shown by the vertical arrows. Cables 24 can run over pulleys 25 from bar 27 to the opposite side 26 for pulling the two halves of the tracks 23 together. Of course, numerous other arrangements that allow opposed tracks to move apart from one another will be readily conceived by those skilled in the art.

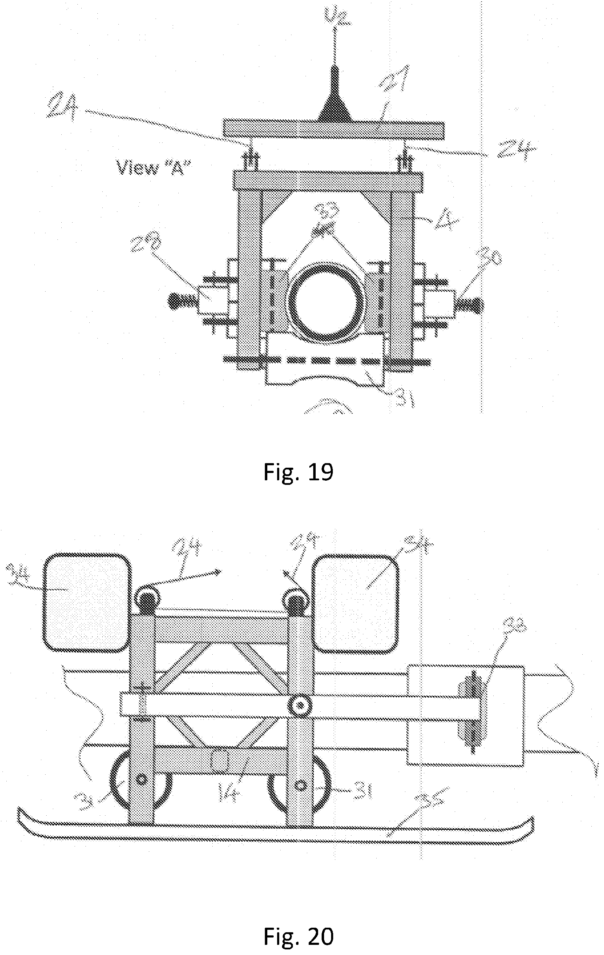

Figure 18a shows, merely by way of example, an alternative frame 14 with four vertical members. Figure 19 provides an end view of the arrangement of Figure 18a. This arrangement is presented simply to demonstrate that there is a wide variety of potential configurations for the sag bend support device. In the arrangement of Figures 18a and 19, a "flying" bar 27 carrying the eye 18 is attached via two cables 24 to four pulleys 32 at the top corners of the frame 14 such that the eye 18 adopts an equilibrium position as it climbs up the pipe 3 at various angles of inclination as shown, by way of example, in the reduced scale view in Figure 18b. A further optional feature of this alternative configuration is the provision of two opposed bars 28 carrying rollers 33 to provide enhanced directional stability in a plan view. Rollers 33 may be of sufficient diameter to climb over buckle arrestors or anodes or other obstructions. Bar 28 preferably carries a hinge 29 with spring 30 holding the two rollers 33 together in compression on the pipe 3.

A further possible feature of this configuration of support 9, which may also be configured for other versions, is that the trolley 12 and stars 13 are replaced with profiled rollers 31 which are of sufficiently large diameter to pass over buckle arrestors and other obstructions, possibly necessitating an increased difference between buoyancy forces U₁ and U₂. It is a detailed design choice to select whichever option is most suited to each case in point. Note also that some vertical "play" may be deliberately provided in the hinge 29 and rotational play at the spring 30. These features recognise that replacing the trolley 12 and stars 13 with two fixed rollers 31 may give rise to a higher rotation of the frame 14 in elevation view when passing over buckle arrestors and other obstructions on the pipe 3. It is undesirable that this rotary oscillation should drag the surface of the rollers 33 up and down over the surface of the pipe 3 or buckle arrestor during transit over obstructions and the play afforded by the hinge 29 and spring 30 may be useful to prevent such scuffing. Lock 21 will be configured, as will be readily appreciated, to suit the configuration of any alternative designs. In the present example the lock 21 may, for example, be configured to engage directly with buckle arrestors and other obstructions to lock the supports to the pipe 3 rather than by braking stars 13 as exemplarily described above.

Figure 20 is an adaptation of the configuration in Figures 18 and 19 but with two possible additional features not unique to this configuration. This configuration comprises supplementary buoyancy 34. Supplementary buoyancy 34 may be added to any support 9, irrespective of its specific configuration, to reduce its submerged weight. This may be helpful in several ways but in particular whilst deploying and recovering the sag bend support before and after the deep water pipelay campaign. The supplementary buoyancy may take any suitable form and will be configured in accordance with the operational depth of the support 9 to which it is attached. Another practical feature is skids 35 to facilitate the passage of the sag bend support device down the "stinger" of any lay vessel 5 so equipped for horizontal lay initiation, or back up the stinger after completion of the deepwater section. Again, skids 25 may be added to any support, irrespective of its specific configuration.

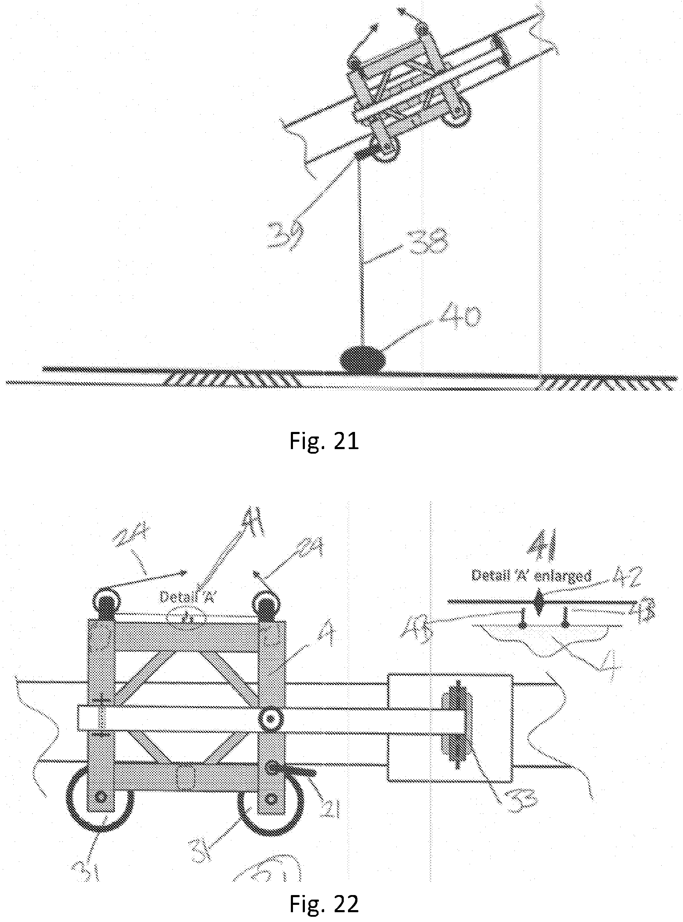

Figure 21 shows one alternative non-limiting preferred configuration to provide a more simple passive method of controlling the position of the Sliding Supports 9. A cable 38 is hung from a trigger 39, which may comprise any suitable mechanism. A weight 40 is attached to the cable 38. The weight is spaced from trigger 39 by a predetermined length of cable, so as to provide a minimum height above the seabed 2 at which the support will operate. Starting the sequence at the point where weight 40 has just settled onto the seabed 2 as the pipe 3 descends downwards and support 9 is at its lowest point, the trigger 39 recognises that Cable 38 has just gone slack and releases the lock 21 to start the operational sequence of the sliding support, such as described earlier. Lock 21 is configured to return to its engaged position once the cable 38 goes taught. A braking mechanism, such as but not limited to the brake for the pulley 16 or the capstan brake 17 may be pre-set to limit the speed of travel of the support 9 when the lock 21 is disengaged.

Figure 22 shows an exemplary arrangement comprising switches 41, which form part of another alternative non-limiting exemplary configuration of for use in providing a passive, semi-passive or fully automated method of controlling the position of any support 9. The tether carries a trigger 42 and one or both top structural members of frame 14 carry any number of levers 43 controlling or monitoring various functions as may be required. Two Levers 43 are shown on Figure 22 for illustration purposes only. The geometry of the tethers changes as the frame 14 stops or passes over obstructions just as the frame 14 in Figures 7 to 15 rotates slightly about its pivot on the trolley 12. As the tether 8 moves the trigger 42 forwards or backwards, the trigger t2 trips various Levers 43 to control the functions of the sag bend support device 1.

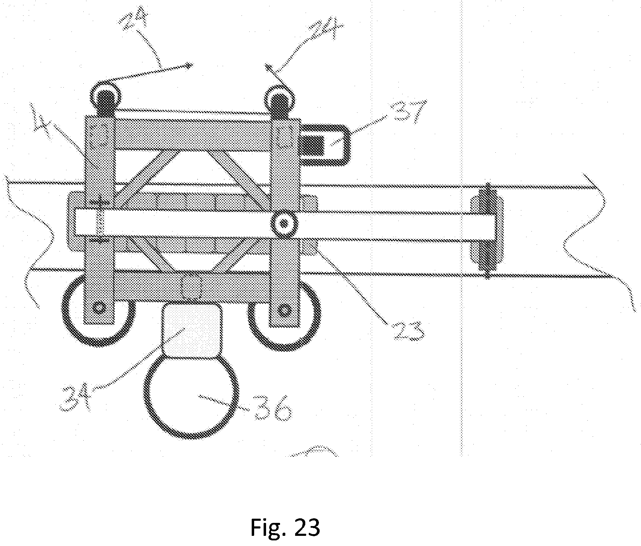

Figure 23 reveals another optional feature applicable to all configurations. Lowering the vast mass of a long deepwater pipeline onto the seabed 2 releases a significant amount of potential energy. Much of this could be recovered on the lay vessel 5 by its tensioners if they were regenerative but the sag bend support device 1 can also be configured to capture some or all of its contribution as the buoyancy element(s) 7 oscillate up and down through ranges X₁ and X₂ as exemplarily shown in Figure 16. This can be achieved by making either hydraulic or electrical regenerative braking an integral part of the pulley 16, capstan brake 17, or any alternative mechanism. Storage means 36 may be provided in the form of a pressure accumulator or batteries installed to store this recovered energy.

Figure 23 also shows the provision of a dock 37 as a further optional feature, which may be applied to any support 9. An ROV 10 may attach to the frame 14 using such a dock. The ROV may be docked for various useful reasons. Where there is energy regeneration for example, the ROV may optionally capture some or all of this regenerated energy and store it on board or pass it back up to its DSV 11. Additionally or alternatively, the dock 37 could facilitate the adjustment of brake settings to control the speed at which the support 9 travel up the pipe, preferably to ensure that on average the support 9 remains on station relative to Lay Vessel 5.

As a further optional feature, which may be applied to any support, Figure 23 shows a track 23 that is configured with hydraulic actuators to hydraulically clamp onto the pipe 3 or be released off the pipe under the command of an operator on the DSV 11 or the lay vessel 5, or otherwise. This enables all obstructions on the pipe 3 to be negotiated but is particularly relevant where the pipe 3 does not have buckle arrestors installed and the supports 3 cannot therefore be docked behind them alternately as described above. Instead, the operators will simply remotely clamp the track 23 onto the pipe 3 to lock its position as desired. Note that although the spacing of crack arrestors along pipe 3 as inferred by Figures 1 and 7 is characteristic of one particular contractor, it may be in excess of what some other pipe lay contractors and designers would consider to be necessary. It is a project by project decision of the Owner's Engineer to balance the perceived functional and economic values of optional pipe lay philosophies using for example multiple crack arrestors and a simple passive sag bend support device such as is shown in Figures 3 and 4 against fewer crack arrestors with a sophisticated sag bend support device such as that shown in Figure 23.

Finally, it may be noted that having managed ROVs 10 also enables other exemplary desirable capabilities to be introduced to any arrangement, including but not limited to:
- ROV 10s dockable onto buoyancy elements 7 will facilitate their inflation being maintained at the desired volumes through compressed gas lines, for air nitrogen or otherwise, between the DSVs 11 or the lay vessel 5 and the ROVs 10.
   Note that:
   ∘ this is greatly facilitated by the height of the buoyancy elements 7 above the seabed 2, thereby reducing both the length of hose required and the pressure of the air or other gas required.
   ∘ Irrespective of the use of ROVs, the weight of tethers 8 being supported by the buoyancy elements 7 can be mitigated by use of non-ferrous tethers 8 with reduced or neutral buoyancy.
- ROVs 10 can provide video monitoring and instrumented feedback of all actions to their operators on DSVs 11 or on the lay vessel 5.
- Power to operate all managed and monitoring functions on the sag bed support device 1 or the ROVs 10 can be supplied from the storage means 36 and/or from the ROV 10.
- ROVs 10 can be used for manoeuvring and holding the sag bend support device 1 in the desired plan position when ocean currents are pushing them off-station.
- ROVs 10 can provide warning of unexpected obstructions along the installation route for the pipe 3.
- ROVs 10 can provide assistance in the installation of the pipe 3 into its correct alignment in cross-currents and where the route bends, for example.
- Where ROVs 10 are additionally clamped onto docks on the buoyancy elements 7 they can help to maintain the buoyancy elements 7 in the desired plan position when ocean currents are pushing them off-station and avoid any tangling of tethers 8.
- It may be found to be advantageous to provide power to the ROVs 10 from the DSVs 11 at docks provided at the buoyancy elements 7 thus limiting the complexity of ROVs 10 docked onto the supports at the sag bend 4 located in much deeper water. This can be implemented where a power cable is incorporated into the tethers 8 directly feeding electrical power from the ROVs 10 in shallower water into the sag bend support device units rather than through ROV 10s docked onto the sag bend support device units in the deep water. This is most practical where individually autonomous SBB Sliding Support Type"B" units as noted above are deployed. However, if adopted with the passive or semi-passive configurations of paired sliding supports 9 Type "A" and Type "B" illustrated in Figures 6 - 14, the power cable in the core of tether 8 will dead-end on the upper Type "B" sliding support 9. In this case, electrical power can be transferred back down to its partner sliding support 9 Type "A" through a separate power cable supported on small pulleys on the intervening tether 8 in the industrially commonplace configuration.
- A further option is for power to be fed to the supports through an ROV 10 docked onto buoyancy bag 7 and then down through a power cable that is integrated with or attached to the tether 8.
- Where power is fed to a support through an ROV 10 docked onto a buoyancy element 7, the power cable may also be configured to carry multiplexed command signals and instrument feedback between the support and the DSL 11, or otherwise, via the ROV 10.

It should be noted that partly passive or non-passive configurations will be possible where operations are partly or fully managed from DSVs 11 by ROVs 10 clamped to docks 37, or otherwise, with some or all functions engaged or disengaged directly by the ROV 10s. In yet further arrangements, some or all functions may be operated by electric, hydraulic or hydro-electric actuators, which may be remotely controlled.

Each support may be fully managed from a DSV 11 to slide up the pipe at a relative velocity to the pipe 3 such that keeps it in the sag bend 4 and on station behind the lay vessel 5. Such activity may be best automated by suitable software controlled from DSVs 11.

Therefore, the disclosed arrangements are well adapted to attain the ends and advantages mentioned as well as those that are inherent therein. The particular embodiments disclosed above are illustrative only, as the teachings of the present disclosure may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope of the present disclosure. The systems and methods illustratively disclosed herein may suitably be practiced in the absence of any element that is not specifically disclosed herein and/or any optional element disclosed herein. While compositions and methods are described in terms of "comprising," "containing," or "including" various components or steps, the compositions and methods can also "consist essentially of" or "consist of" the various components and steps. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces. If there is any conflict in the usages of a word or term in this specification and one or more patent or other documents that may be incorporated herein by reference, the definitions that are consistent with this specification should be adopted.

As used herein, the phrase "at least one of" preceding a series of items, with the terms "and" or "or" to separate any of the items, modifies the list as a whole, rather than each member of the list (i.e., each item). The phrase "at least one of" allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

Although various example embodiments have been disclosed, a worker of ordinary skill in this art would recognize that certain modifications would come within the scope of this disclosure. For that reason, the following claims should be studied to determine the scope and content of this disclosure.

## Claims

1. A sag bend support device (1) for attachment to an underwater pipe (3) being laid, the sag bend support device (1) comprising at least two supports (9) for slidable attachment to the pipe (3) and at least two buoyancy elements (7), and being configured to support the sag bend to reduce the radius of curvature of the sag bend and thereby limit bending stresses in the pipe (3), wherein each of the supports (9) is associated with at least one of the buoyancy elements (7) for imposing a buoyant force (U₁, U₂) thereon, **characterised in that** the supports (9) are joined to one another via a tether (8), and wherein the tether (8) is attached to a leading one of the supports (9), in a direction of sliding travel along the pipe (3), and extends to and slidably engages with a trailing one of the supports (9) before terminating at the at least one buoyancy element (7) that imposes a buoyant force (U₁) on the trailing one of the supports (9).

2. A sag bend support device as claimed in Claim 1 further comprising a braking mechanism for controlling the sliding of at least one of the supports along the pipe.

3. A sag bend support device as claimed in Claim 2, wherein the braking mechanism is arranged to apply a constant or variable braking force.

4. A sag bend support device as claimed in any preceding claim, wherein one or more of the supports comprises one or more wheels, rollers or tracks for engaging the pipe to assist sliding movement of the support along the pipe.

5. A sag bend support device as claimed in any preceding claim, wherein at least one of the buoyancy elements comprises a gas filled bag.

6. A sag bend support device as claimed in any preceding claim, wherein the tether comprises a cord, cable or strap.

7. A sag bend support device as claimed in any preceding claim, wherein the buoyancy elements are configured such that the buoyant force imposed on the two supports is different.

8. A sag bend support device as claimed in any preceding claim, wherein the trailing one of the supports comprises a pulley (16) or capstan (17) for slidably engaging with the tether.

9. A sag bend support device as claimed in any preceding claim, wherein the leading one of the supports comprises at least one of the buoyancy elements attached thereto, preferably wherein the arrangement of the buoyancy elements is such that a greater buoyant force is imposed on the leading one of the supports than on the trailing one of the supports.

10. A sag bend support device as claimed in any preceding claim, wherein at least one of the supports comprises a frame (14), which is pivotally mounted to a trolley that slides along the pipe.

11. A pipe laying system comprising a lay vessel (5), a pipe (3), and a sag bend support device (1) as defined in any of the preceding claims for supporting a sag bend of the pipe (3).

12. A pipe laying system as claimed in Claim 11, which is configured to maintain at least one of the supports at a constant distance along the pipe from the lay vessel.

## Patentansprüche

1. Durchhangbogenstützvorrichtung (1) zur Befestigung an einem zu verlegenden Unterwasserrohr (3), wobei die Durchhangbogenstützvorrichtung (1) mindestens zwei Stützen (9) zur verschiebbaren Befestigung an dem Rohr (3) und mindestens zwei Auftriebselemente (7) umfasst, und konfiguriert ist, um die durchhängende Biegung zu stützen, um den Krümmungsradius der durchhängenden Biegung zu reduzieren und dadurch Biegespannungen in dem Rohr (3) zu begrenzen, wobei jede der Stützen (9) mit mindestens einem der Auftriebselemente (7) verbunden ist, um eine Auftriebskraft (U₁, U₂) darauf auszuüben, **dadurch gekennzeichnet, dass** die Stützen (9) über ein Halteseil (8) miteinander verbunden sind, wobei das Halteseil (8) an einer vorderen der Stützen (9) in einer Richtung der Gleitbewegung entlang des Rohrs (3) befestigt ist und sich zu einer hinteren der Stützen (9) erstreckt und gleitend in diese eingreift, bevor es an dem mindestens einen Auftriebselement (7) endet, das eine Auftriebskraft (U₁) auf die hintere der Stützen (9) ausübt.

2. Durchhangbogenstützvorrichtung nach Anspruch 1, ferner umfassend einen Bremsmechanismus zum Steuern des Gleitens mindestens einer der Stützen entlang des Rohres.

3. Durchhangbogenstützvorrichtung nach Anspruch 2, wobei der Bremsmechanismus angeordnet ist, um eine konstante oder variable Bremskraft aufzubringen.

4. Durchhangbogenstützvorrichtung nach einem der vorstehenden Ansprüche, wobei eine oder mehrere der Stützen ein oder mehrere Räder, Rollen oder Schienen zum Eingreifen in das Rohr umfassen, um die Gleitbewegung der Stütze entlang des Rohres zu unterstützen.

5. Durchhangbogenstützvorrichtung nach einem der vorstehenden Ansprüche, wobei mindestens eines der Auftriebselemente einen mit Gas gefüllten Beutel umfasst.

6. Durchhangbogenstützvorrichtung nach einem der vorstehenden Ansprüche, wobei die Leine eine Schnur, ein Kabel oder ein Band umfasst.

7. Durchhangbogenstützvorrichtung nach einem der vorstehenden Ansprüche, wobei die Auftriebselemente konfiguriert sind, um eine unterschiedliche Auftriebskraft auf die beiden Stützen auszuüben.

8. Durchhangbogenstützvorrichtung nach einem der vorstehenden Ansprüche, wobei die hintere der Stützen eine Rolle (16) oder ein Capstan (17) zum gleitenden Eingreifen in das Halteseil umfasst.

9. Durchhangbogenstützvorrichtung nach einem der vorstehenden Ansprüche, wobei die vordere der Stützen mindestens eines der daran befestigten Auftriebselemente umfasst, wobei die Anordnung der Auftriebselemente vorzugsweise so ist, dass auf die vordere der Stützen eine größere Auftriebskraft ausgeübt wird als auf die hintere der Stützen.

10. Durchhangbogenstützvorrichtung nach einem der vorstehenden Ansprüche, wobei mindestens eine der Stützen einen Rahmen (14) umfasst, der schwenkbar an einem Wagen befestigt ist, der entlang des Rohres gleitet.

11. Rohrverlegesystem, umfassend ein Verlegegefäß (5), ein Rohr (3) und eine Durchhangbogenstützvorrichtung (1) nach einem der vorstehenden Ansprüche zum Abstützen einer Durchbiegung des Rohres (3).

12. Rohrverlegesystem nach Anspruch 11, das konfiguriert ist, um mindestens eine der Stützen in einem konstanten Abstand entlang des Rohres vom Verlegeschiff zu halten.

## Revendications

1. Dispositif de support de courbure (1) pour fixation à un tuyau sous-marin (3) en cours de pose, le dispositif de support de courbure (1) comprenant au moins deux supports (9) pour une fixation coulissante au tuyau (3) et au moins deux éléments de flottabilité (7), et étant conçu pour supporter la courbure afin de réduire le rayon de courbure et limiter ainsi les contraintes de flexion dans le tuyau (3), dans lequel chacun des supports (9) est associé à au moins l'un des éléments de flottabilité (7) pour leur imposer une force de flottabilité (U₁, U₂), **caractérisé en ce que** les supports (9) sont reliés les uns aux autres par l'intermédiaire d'une attache (8), et dans lequel l'attache (8) est fixée à un support avant parmi les supports (9), dans une direction de déplacement en coulissement le long du tuyau (3), et s'étend jusqu'à et vient en prise de manière coulissante avec un support arrière parmi les supports (9) avant de se terminer au niveau de l'au moins un élément de flottabilité (7) qui impose une force de flottabilité (U₁) sur le support arrière parmi les supports (9).

2. Dispositif de support de courbure selon la revendication 1, comprenant en outre un mécanisme de freinage pour commander le coulissement d'au moins l'un des supports le long du tuyau.

3. Dispositif de support de courbure selon la revendication 2, dans lequel le mécanisme de freinage est agencé pour appliquer une force de freinage constante ou variable.

4. Dispositif de support de courbure selon l'une quelconque revendication précédente, dans lequel un ou plusieurs parmi les supports comprennent un ou plusieurs roues, rouleaux ou rails pour venir en prise avec le tuyau afin d'aider le mouvement de coulissement du support le long du tuyau.

5. Dispositif de support de courbure selon l'une quelconque revendication précédente, dans lequel au moins l'un des éléments de flottabilité comprend une poche remplie de gaz.

6. Dispositif de support de courbure selon l'une quelconque revendication précédente, dans lequel l'attache comprend une corde, un câble ou une sangle.

7. Dispositif de support de courbure selon l'une quelconque revendication précédente, dans lequel les éléments de flottabilité sont conçus de telle sorte que la force de flottabilité imposée sur les deux supports soit différente.

8. Dispositif de support de courbure selon l'une quelconque revendication précédente, dans lequel le support arrière parmi les supports comprend une poulie (16) ou un cabestan (17) pour venir en prise de manière coulissante avec l'attache.

9. Dispositif de support de courbure selon l'une quelconque revendication précédente, dans lequel le support avant parmi les supports comprend au moins l'un des éléments de flottabilité qui y sont fixés, de préférence dans lequel l'agencement des éléments de flottabilité est tel qu'une force de flottabilité plus importante est imposée sur le support avant parmi les supports que sur le support arrière parmi les supports.

10. Dispositif de support de courbure selon l'une quelconque revendication précédente, dans lequel au moins l'un des supports comprend un cadre (14), qui est monté de manière pivotante sur un chariot qui coulisse le long du tuyau.

11. Système de pose de tuyau comprenant un navire de pose (5), un tuyau (3) et un dispositif de support de courbure (1) selon l'une quelconque des revendications précédentes pour supporter une courbure du tuyau (3).

12. Système de pose de tuyau selon la revendication 11, qui est conçu pour maintenir au moins l'un des supports à une distance constante le long du tuyau par rapport au navire de pose.
